# EUROPÄISCHE PATENTANMELDUNG

(11) **EP 4 012 005 A1**
(43) Veröffentlichungstag der Anmeldung: **15.06.2022**
(21) Anmeldenummer: 21211715.4
(22) Anmeldetag: 01.12.2021
(51) Int. Cl.: C10B 53/02

(54) **VERFAHREN ZUR VERRINGERUNG DER PRODUKTIONSKOSTEN BEI DER HERSTELLUNG VON PRODUKTEN IN EINEM PRODUKTIONSBETRIEB**

(30) Priorität: 11.12.2020 DE 102020215688
(71) Anmelder: thyssenkrupp rothe erde Germany GmbH, 44137 Dortmund (DE); thyssenkrupp AG, 45143 Essen (DE)
(72) Erfinder: Spintig, Wilfried, 59558 Lippstadt (DE); Schönnagel, Natallia, 44319 Dortmund (DE)
(74) Vertreter: thyssenkrupp Intellectual Property GmbH

(57) **Zusammenfassung**

Die vorliegende Erfindung betrifft ein Verfahren und eine Anlage zur Verringerung der Produktionskosten bei der Herstellung von Produkten in einem Produktionsbetrieb, wobei in dem Produktionsbetrieb Restholz (8) aus Verpackungsmaterial von in den Produktionsbetrieb gelieferten Halbzeugen, Vorprodukten, Produktionsmitteln oder sonstigen Materialien anfällt. Um ein Verfahren zur Verringerung der Produktionskosten bei der Herstellung von Produkten in einem Produktionsbetrieb anzugeben, mit dem sowohl die Produktionskosten verringert als auch die Erzeugung von klimaschädlichem CO₂ signifikant vermieden werden kann, werden folgende Verfahrensschritte vorgeschlagen:
V1) Verarbeitung des Restholzes (8) zu einem Einsatzmaterial für eine Pyrolyseanlage (4) zur Herstellung von Pflanzenkohle (5);
V2) Einbringen des Einsatzmaterials in die Pyrolyseanlage (4);
V3) Umwandlung des Einsatzmaterials durch Pyrolyse in Pflanzenkohle (5) unter Erzeugung von Abwärme (10);
V4) Verkauf der Pflanzenkohle (5) an Pflanzenkohleverwerter;
V5) Verwendung der Abwärme (10) zur Erwärmung eines Heizmediums (3) zur Beheizung von Gebäuden (1) des Produktionsbetriebes und/oder zum Trocknen des Einsatzmaterials.

## Beschreibung

Die Erfindung betrifft ein Verfahren zur Verringerung der Produktionskosten bei der Herstellung von Produkten in einem Produktionsbetrieb, wobei in dem Produktionsbetrieb Restholz aus Verpackungsmaterial von in den Produktionsbetrieb gelieferten Halbzeugen, Vorprodukten, Produktionsmitteln oder sonstigen Materialien anfällt.

Aus dem Stand der Technik ist es bekannt, Stroh und Pflanzenreste einer Pyrolyseanlage zuzuführen, um daraus zusammen mit Kompost natürliche Düngemittel herzustellen ("Terra Preta").

Bei der Herstellung von Produkten in einem Produktionsbetrieb werden in das Werk Vormaterialien, Halbzeuge, Produktionsmittel und sonstige Gegenstände geliefert, deren Verpackungen und/oder Transportsicherungseinrichtungen zumindest zum Teil aus Holz bestehen. Dadurch können in einem Produktionsbetrieb große Mengen an Restholz anfallen, welches aus den Verpackungen und/oder Transportsicherungseinrichtungen stammt. Da es für dieses Restholz keine Verwendungsmöglichkeit mehr in dem Produktionsbetrieb gibt, wird das Restholz unter Zahlung einer Entsorgungsgebühr an Verwertungsbetriebe abgegeben, die es einer thermischen Verwertung, also einer Verbrennung, zuführen. Dabei entsteht das klimaschädliche Gas CO₂. Das von dem Produktionsbetrieb an den Verwertungsbetrieb abgegebene Restholz erzeugt für den Produktionsbetrieb somit einerseits Kosten durch die anfallende Entsorgungsgebühr, und andererseits gelangt durch die Verbrennung des Restholzes klimaschädliches CO₂ in die Erdatmosphäre.

Aufgabe der Erfindung ist es, ein Verfahren zur Verringerung der Produktionskosten bei der Herstellung von Produkten in einem Produktionsbetrieb anzugeben, mit dem sowohl die Produktionskosten verringert als auch die Erzeugung von klimaschädlichem CO2 signifikant vermieden werden kann. Aufgabe der Erfindung ist es auch, eine Anlagenkonfiguration eines Produktionsbetriebes zur Umsetzung des Verfahrens anzugeben.

Hinsichtlich des Verfahrens wird diese Aufgabe durch ein Verfahren mit den Merkmalen des Patentanspruchs 1 gelöst. Vorteilhafte Weiterbildungen des erfindungsgemäßen Verfahrens ergeben sich aus den auf den unabhängigen Verfahrensanspruch direkt oder indirekt rückbezogenen Unteransprüchen, der nachfolgenden Beschreibung sowie den Zeichnungen.

Hinsichtlich der Anlagenkonfiguration wird diese Aufgabe durch eine Anlagenkonfiguration einer Produktionsanlage mit den Merkmalen des Patentanspruchs 4 gelöst. Vorteilhafte Weiterbildungen der erfindungsgemäßen Vorrichtung ergeben sich aus den auf den unabhängigen Sachanspruch direkt oder indirekt rückbezogenen Unteransprüchen, der nachfolgenden Beschreibung sowie den Zeichnungen.

Das erfindungsgemäße Verfahren zur Verringerung der Produktionskosten bei der Herstellung von Produkten in einem Produktionsbetrieb geht aus von einem Produktionsbetrieb, in dem Restholz aus Verpackungsmaterial von in den Produktionsbetrieb gelieferten Halbzeugen, Vorprodukten, Produktionsmitteln oder sonstigen Materialien anfällt. Mit dem Begriff "Verpackungsmaterial" sollen dabei sämtliche Materialien bezeichnet sein, die für die Verpackung, die Transportsicherung oder für sonstige Zwecke im Rahmen des Antransports, der Auslieferung und der Verwendung der in den Produktionsbetrieb angelieferten Materialien verwendet werden.

Das erfindungsgemäße Verfahren umfasst folgende Verfahrensschritte:
V1) Verarbeitung des Restholzes zu einem Einsatzmaterial für eine Pyrolyseanlage zur Herstellung von Pflanzenkohle;
V2) Einbringen des Einsatzmaterials in die Pyrolyseanlage;
V3) Umwandlung des Einsatzmaterials durch Pyrolyse in Pflanzenkohle unter Erzeugung von Abwärme;
V4) Verkauf der Pflanzenkohle an Pflanzenkohleverwerter;
V5) Verwendung der Abwärme zur Erwärmung eines Heizmediums zur Beheizung von Gebäuden des Produktionsbetriebes und/oder zum Trocknen des Einsatzmaterials.

Im Rahmen des erfindungsgemäßen Verfahrens wird durch den Pyrolyseprozess Pflanzenkohle erzeugt. Diese Pflanzenkohle ist ein Wertstoff, der von dem Betreiber des Produktionsbetriebs an geeignete Abnehmer verkauft werden kann. Geeignete Abnehmer können unterschiedliche Arten von Pflanzenkohleverwertern sein, etwa Händler, die Pflanzenkohle an landwirtschaftliche Erzeugungsbetriebe weiterverkaufen, die mit der Pflanzenkohle die Qualität ihres Ackerbodens verbessern. Auch kann die Pflanzenkohle von dem Verwerter als Düngergrundstoff, d.h. als Grundstoff für die Erzeugung von Düngemittel, verwendet werden.

Durch den Verkauf der Pflanzenkohle erzielt der Betreiber des Produktionsbetriebs einen zusätzlichen Geldzufluss, anstatt nach der bisherigen Vorgehensweise einen Geldabfluss durch die Entsorgungsgebühr für das Restholz hinnehmen zu müssen. Dies führt zu einer spürbaren Verringerung der Produktionskosten für die Herstellung der Produkte in dem Produktionsbetrieb.

Außerdem wird der in dem Restholz enthaltene Kohlenstoff in der Pflanzenkohle gebunden und wird insbesondere nicht in CO₂ umgewandelt und der Erdatmosphäre zugeführt. Der Kohlenstoff bleibt zum Beispiel bei in den Ackerboden eingebrachter Pflanzenkohle dauerhaft gebunden und gelangt nicht in die Erdatmosphäre. Auf diese Weise entfällt die CO₂-Menge, die nach der bisherigen Vorgehensweise durch die Verbrennung des Restholzes anfällt. Dies führt zu einer positiven CO₂-Bilanz und zu einer Reduzierung des Ausstoßes von klimaschädlichem CO₂. CO₂ wird auf diese Weise aktiv aus dem Stoffkreislauf entnommen.

Der Produktionsbetrieb kann durch das erfindungsgemäße Verfahren CO₂-Zertifikate erwirtschaften, die er am Markt für den Handel von CO₂-Zertifikaten verkaufen und so weitere, zusätzliche Einnahmen erzielen kann. Auch diese zusätzlichen Einnahmen tragen zu einer Verringerung der Produktionskosten der Produkte bei.

Der Verfahrensschritt V5) "Verwendung der Abwärme zur Erwärmung eines Heizmediums zur Beheizung von Gebäuden des Produktionsbetriebes und/oder zum Trocknen des Einsatzmaterials" kann dabei zum Beispiel so umgesetzt werden, dass Kühlwasser, welches zum Kühlen der Pyrolyseanlage verwendet wird und sich dabei erwärmt, unmittelbar zur Beheizung der Gebäude des Produktionsbetriebes eingesetzt wird. Alternativ könnte die Abwärme auch dazu genutzt werden, das Heizmedium einer Heizungsanlage in einem zusätzlichen Wärmetauscher zu erwärmen.

Das erfindungsgemäße Verfahren und die erfindungsgemäße Anlage stellen einem Produktionsbetrieb somit mehrere Stellhebel zur Verfügung, mit denen die Produktionskosten verringert werden können:
- Erzielung zusätzlicher Geldeinnahmen aus dem Verkauf der erzeugten Pflanzenkohle,
- Reduzierung der Betriebskosten des Produktionsbetriebs durch Verwendung der in dem Pyrolyseprozess entstehenden Abwärme,

Erzielung zusätzlicher Geldeinnahmen aus dem Verkauf bzw. dem Handel mit CO₂-Zertifikaten, die mit dem erfindungsgemäßen Verfahren und der erfindungsgemäßen Anlage erwirtschaftet worden sind. Auch für die Belastung der Erdatmosphäre mit klimaschädlichem CO₂ haben das erfindungsgemäße Verfahren und die erfindungsgemäße Anlage mehrere positive Auswirkungen:
- Verringerung der Menge des in die Erdatmosphäre eintretenden CO₂ durch Bindung des CO₂ in der Pflanzenkohle. Das im Rahmen des Wachstums der Pflanzen, aus denen das Restholz und das zusätzliche Biomaterial gewonnen wird, der Erdatmosphäre entzogene CO₂ bleibt durch das erfindungsgemäße Verfahren in der Pflanzenkohle gebunden und dadurch der Erdatmosphäre dauerhaft entzogen. Die CO₂-Bilanz ist daher negativ, d.h. CO₂ wird aktiv der Atmosphäre entnommen. In jedem Kilogramm Kohlenstoff, das eine Pflanze während ihrer Lebenszeit gebildet hat, stecken rund 3,6 Kilogramm Kohlendioxid aus der Atmosphäre, welches die Pflanze zum Wachsen braucht. Bei einer Verbrennung des Restholzes und des zusätzlichen Biomaterials würde das Treibhausgas CO₂ komplett wieder freigesetzt werden. Das erfindungsgemäße Verfahren verhindert diese Freisetzung. Das CO₂ bleibt dauerhaft in der Pflanzenkohle gespeichert.
- Verringerung des CO₂-Ausstoßes des Produktionsbetriebs durch Verringerung der Menge an werksextern bezogener Energie zum Erwärmen des Heizmediums, mit dem die Gebäude des Produktionsbetriebes beheizt werden. Die im Rahmen des Pyrolyseprozesses erzeugte Abwärme wird dazu genutzt, das Heizmedium zu erwärmen. Dadurch kann auf Energie von außerhalb des Produktionsbetriebes für die Erwärmung des Heizmediums entweder komplett verzichtet werden, oder zumindest kann der externe Energiebedarf deutlich reduziert werden.

Die Erfindung leistet damit einen wesentlichen Beitrag zur Verringerung des CO₂-Ausstoßes in die Atmosphäre und zu einer klimapositiven CO₂-Bilanz.

Restholz aus Industrie, Land- und vor allem Fortwirtschaft (Borkenkäferschadholz) wird erfindungsgemäß mit Hilfe der Pyrolyse (Betreiben der Pyrolyseanlage mit erneuerbarer Energie) in Holzkohle verwandelt. Diese Holzkohle hat nur noch etwa 1% des Volumens, welches das Ausgangsmaterial Holz hatte, besteht aber nahezu ausschließlich aus Kohlenstoff. Dieser ist sehr stabil und kann über Jahrzehnte gelagert werden (zum Beispiel in Bergwerken, alten Tagebau-Gruben etc.). Das beim Wachstum des Holzes gebundene CO₂ wird somit für einen langen Zeitraum gespeichert und kann von späteren Generationen als chemischer Grundstoff verwendet werden.

Als Heizmittel für die Beheizung der Gebäude des Produktionsbetriebes kann beispielsweise Warmwasser verwendet werden.

Nach einer Ausführungsform des erfindungsgemäßen Verfahrens ist vorgesehen, dass von außerhalb des Produktionsbetriebes zusätzliches Biomaterial bezogen wird, welches zusammen mit dem Restholz als Einsatzmaterial für die Pyrolyseanlage eingesetzt wird. Dieses zusätzliche Biomaterial kann ebenfalls Holz sein, es kann aber auch ein anderes pflanzliches Material als zusätzliches Biomaterial verwendet werden. Der externe Bezug von zusätzlichem Biomaterial kommt insbesondere dann in Betracht, wenn das in dem Produktionsbetrieb vorhandene Restholz nicht in ausreichender Menge verfügbar ist, um die Pyrolyseanlage kontinuierlich zu betreiben. Gegebenenfalls ist es möglich, für die Entgegennahme von zusätzlichem Biomaterial von dem Abgebenden ein Entgelt zu verlangen, ähnlich wie ein Produktionsbetrieb heute sein Restholz an einen Entsorgungsbetrieb abgibt und dafür ein Entgelt an den Entsorgungsbetrieb zahlen muss, wenn es das Restholz nicht werksintern verwerten kann. Auf diese Weise wird eine zusätzliche Geldeinnahme realisiert, welche wiederum dazu beiträgt, die Betriebskosten bzw. Produktionskosten des Produktionsbetriebes zu verringern.

Nach einer Ausführungsform des erfindungsgemäßen Verfahrens ist vorgesehen, dass die Pyrolyseanlage mit aus erneuerbarer Energie erzeugtem Strom betrieben wird. Auf diese Weise wird die CO₂ Bilanz des Produktionsbetriebes weiter verbessert. Die erneuerbare Energie kann dezentral gewonnen werden. Die dazu erforderlichen Anlagen können dezentral aufgebaut werden. So kann beispielsweise eine Windenergieanlage auf dem Werksgelände des Produktionsbetriebes aufgebaut werden, welche die für den Betrieb der Pyrolyseanlage benötigte Energie erzeugt. Auf diese Weise ist das erfindungsgemäße Verfahren bzw. das erfindungsgemäße Anlagenkonzept flexibel einsetzbar für unterschiedliche Fertigungsbetriebe.

Die erfindungsgemäße Anlage zur Verringerung der Produktionskosten bei der Herstellung von Produkten in einem Produktionsbetrieb ist vorgesehen für den Einsatz in einem Produktionsbetrieb, das Werksgebäude aufweist, welche mithilfe einer Heizungsanlage durch ein Heizmedium beheizbar sind. Erfindungsgemäß ist vorgesehen, dass die Anlage eine Pyrolyseanlage zur Herstellung von Pflanzenkohle umfasst, wobei die Pyrolyseanlage eine Pyrolyseeinheit, eine Einrichtung zur Vorbereitung und Zuführung von in dem Produktionsbetrieb anfallendem Restholz zu der Pyrolyseeinheit und eine Abführeinrichtung zum Abführen von Pflanzenkohle aus der Pyrolyseeinheit umfasst, wobei eine mit der Abwärme des Pyrolyseprozesses betreibbare Wärmetauschereinrichtung vorgesehen ist, mit der zumindest ein Teil des von der Heizungsanlage verwendeten Heizmediums erwärmbar ist.

Das im Rahmen des Pyrolyseprozesses erzeugte Produkt Pflanzenkohle wird über die Abführeinrichtung von der Pyrolyseeinheit abgeführt, gesammelt und anschließend an geeignete Verwertungsbetriebe oder Zwischenhändler verkauft.

Die erfindungsgemäße Anlage kann in beliebige Produktionsbetriebe integriert werden, in denen eine ausreichende Menge an Restholz aus Verpackungsmaterial anfällt, das aus der Verpackung von in den Produktionsbetrieb gelieferten Halbzeugen, Vorprodukten, Produktionsmitteln oder sonstigen Materialien stammt.

Mit der erfindungsgemäßen Anlage kann durch Pyrolyse aus dem Restholz Pflanzenkohle erzeugt werden, die mit Gewinn an Pflanzenkohleverwerter verkauft werden kann. Der auf diese Weise erzielte Geldzufluss führt zu einer Verringerung der Produktionskosten im Produktionsbetrieb. Gleichzeitig liefert die exotherm arbeitende Pyrolyseanlage eine ausreichende Menge an Abwärme, um damit in einer Wärmetauschereinrichtung das Heizmedium zu erwärmen, mit der die Heizungsanlage für die Werksgebäude des Produktionsbetriebes betrieben wird. Auf diese Weise wird keine oder eben eine signifikant geringere Menge an externer Energie benötigt, um das Heizmedium auf die benötigte Temperatur für den Betrieb der Heizungsanlage zu erwärmen. Die auf diese Weise verringerten Energiekosten des Produktionsbetriebes tragen zur Verringerung der Produktionskosten für die hergestellten Produkte bei.

Nach einer Ausführungsform der erfindungsgemäßen Anlage ist vorgesehen, dass eine Energieerzeugungseinrichtung vorgesehen ist, die mit erneuerbarer Energie betreibbar ist und mit der der für den Betrieb der Pyrolyseanlage benötigte Strom erzeugbar ist. Derartige Energieerzeugungseinrichtungen können beispielsweise Windenergieanlagen oder Photovoltaikanlagen sein. Insbesondere können diese Energieerzeugungseinrichtungen dezentral in unmittelbarer Umgebung der erfindungsgemäßen Anlage aufgebaut werden. Dies trägt dazu bei, dass die erfindungsgemäße Anlage in einen beliebigen bestehenden Produktionsbetrieb integriert werden kann.

Nach einer Ausführungsform der erfindungsgemäßen Anlage ist vorgesehen, dass die Einrichtung zur Vorbereitung und Zuführung von in dem Produktionsbetrieb anfallendem Restholz einen Sammelbehälter umfasst, in welchem zumindest das für die Verarbeitung in der Pyrolyseeinheit vorbereitete Restholz aus dem Produktionsbetrieb sammelbar ist. In den Sammelbehälter wird das insbesondere für einen kontinuierlichen Betrieb der Pyrolyseeinheit benötigte Restholz vorgehalten. Der Sammelbehälter ist dabei so groß dimensioniert, dass er eine so große Menge an Restholz aufnehmen kann, wie für einen kontinuierlichen Betrieb der Pyrolyseanlage benötigt wird.

Soweit das in dem Produktionsbetrieb anfallende Restholz nicht ausreichen sollte, um die Pyrolyseanlage kontinuierlich zu betreiben, wird der Sammelbehälter so dimensioniert, dass er neben dem in dem Produktionsbetrieb anfallenden Restholz eine ausreichende Menge von zusätzlichem Biomaterial aufnehmen kann, welches aus werksexternen Quellen bezogen wird.

Nach einer Ausführungsform der erfindungsgemäßen Anlage ist vor dem Sammelbehälter oder zwischen dem Sammelbehälter und der Pyrolyseeinheit eine Trocknungseinheit vorgesehen, mit der das der Pyrolyseeinheit zuzuführende Restholz auf eine gewünschte Restfeuchte getrocknet werden kann. Auf diese Weise kann sichergestellt werden, dass das Einsatzmaterial, das der Pyrolyseeinheit zugeführt wird, stets die gleiche Restfeuchte aufweist. Dies trägt zu einer stabilen Betriebsführung und zu einem störungsfreien kontinuierlichen Betrieb der Pyrolyseanlage bei, weil die Restfeuchte des Einsatzstoffes keinen unzulässig großen Schwankungen unterliegt.

Nach einer Ausführungsform der erfindungsgemäßen Anlage sind Rückführmittel vorgesehen, mit denen zumindest ein Teil der Abwärme aus dem Pyrolyseprozess der Trocknungseinheit zuführbar ist, um diese zu betreiben. Auf diese Weise kann die Abwärme nicht nur für das erwärmen des Heizmediums der Heizanlage verwendet werden. Auch kann der Anteil der Abwärme, der für die Trocknung des Einsatzstoffes für die Pyrolyseeinheit verwendet wird, schwanken, weil das Restholz und/oder das zusätzliche Biomaterial durchaus unterschiedliche Feuchtewerte aufweisen kann. Auch können Schwankungen in dem Bedarf der Abwärme für die Erwärmung des Heizmediums dadurch ausgeglichen werden, dass die für die Trocknung verwendete Abwärmemenge erhöht wird. Durch die Rückführung eines Teils der im Rahmen des Pyrolyseprozesses entstehenden Abwärmemenge zu der Trocknungseinheit wird somit ein flexibler Betrieb der erfindungsgemäßen Anlage erreicht.

Die Erfindung wird nachfolgend anhand der Figuren näher erläutert. Es zeigen jeweils schematisch
Fig. 1 den erfindungsgemäßen Verfahrensablauf;
Fig. 2 eine erfindungsgemäße Anlage.

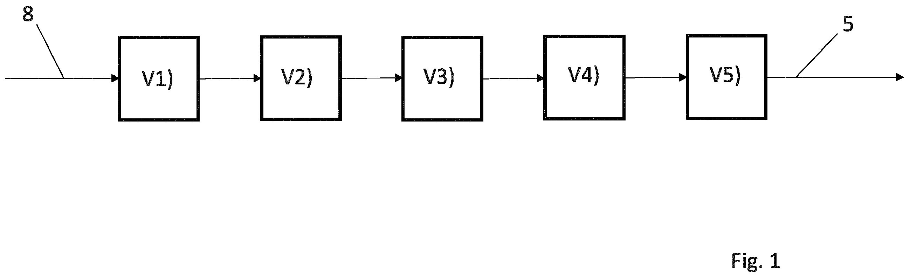

Fig. 1 zeigt eine schematische Darstellung des erfindungsgemäßen Verfahrensablaufs. Gemäß Verfahrensschritt V1) erfolgt eine Verarbeitung des Restholzes, das in den Produktionsbetrieb anfällt, zu einem Einsatzmaterial für eine Pyrolyseanlage, die zur Herstellung von Pflanzenkohle dient. Gemäß Verfahrensschritt V2) wird das Einsatzmaterial in die Pyrolyseeinheit der Pyrolyseanlage eingebracht. In der Pyrolyseeinheit erfolgt im Verfahrensschritt V3) die Umwandlung des Einsatzmaterials durch Pyrolyse in Pflanzenkohle unter Erzeugung von Abwärme. Die Abwärme wird im Verfahrensschritt V5) dazu verwendet, ein Heizmedium einer Heizanlage, mit dem die Werksgebäude des Produktionsbetriebes beheizt werden, zu erwärmen und/oder das Einsatzmaterial für die Pyrolyseanlage zu trocknen.

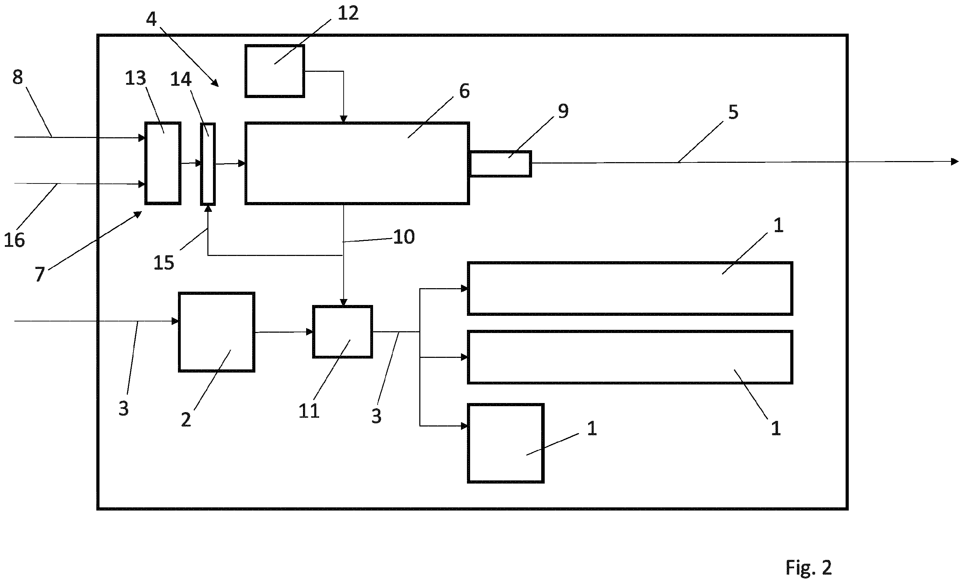

Fig. 2 zeigt eine erfindungsgemäße Anlage zur Verringerung der Produktionskosten bei der Herstellung von Produkten in einem Produktionsbetrieb, wobei das Produktionsbetrieb Werksgebäude 1 aufweist, welche mithilfe einer Heizungsanlage 2 durch ein Heizmedium 3 beheizbar sind. Die Werksgebäude 1 können dabei sowohl Werkzeughallen, Produktionshallen, Verwaltungsgebäude, Lagergebäude sowie sämtliche sonstigen Arten von Gebäuden umfassen, die in einem Produktionsbetrieb vorhanden sein können. Der Heizungsanlage 2 wird das Heizmedium 3 von außen zugeführt. Es kann sich beispielsweise um Wasser handeln.

Das Restholz 8 wird in großem Umfang als Verpackungsmaterial von außen in den Produktionsbetrieb hinein geliefert. Im dargestellten Ausführungsbeispiel wird noch zusätzliche Biomaterial 16 von außen bezogen, damit ausreichend viel Einsatzmaterial für einen kontinuierlichen Betrieb der Pyrolyseanlage 4 vorhanden ist. Die Pyrolyseanlage 4 umfasst den Sammelbehälter 13, in dem das Einsatzmaterial vorgehalten wird, welches der Pyrolyseeinheit 6 zugeführt wird.

In dem in Fig. 2 dargestellten Ausführungsbeispiel der erfindungsgemäßen Anlage ist zwischen den Sammelbehälter 13 und der Pyrolyseeinheit 6 eine Trocknungseinheit 14 vorgesehen. In der Trocknungseinheit 14 wird das Einsatzmaterial derart getrocknet, dass es eine bestimmte vorgegebene Restfeuchte aufweist. Auf diese Weise wird erreicht, dass das Einsatzmaterial beim Eintritt in die Pyrolyseeinheit 6 immer dieselbe Restfeuchte aufweist, was zu einer stabilen Prozessführung beiträgt und einem stabilen, immer gleichen Endprodukt Pflanzenkohle 5 führt.

In der Pyrolyseeinheit 6 wird das Einsatzmaterial in einem exothermen Prozess in Pflanzenkohle 5 umgewandelt. Mit Hilfe der Abführvorrichtung 9 wird das am Ausgang der Pyrolyseeinheit 6 anfallende Produkt Pflanzenkohle 5 abgeführt und zum Beispiel zu Gebinden (beispielsweise in Säcke) verpackt. Die Pflanzenkohle 5 kann als Wertstoff vom Betreiber des Produktionsbetriebes an Dritte verkauft werden. Der damit erzielte Geldzufluss führt betriebswirtschaftlich zu einer Verringerung der Produktionskosten.

Der für den Betrieb der Pyrolyseeinheit 6 erforderliche Strom wird in der in Fig. 2 dargestellten Anlagenkonfiguration durch eine Energieerzeugungseinrichtung 12 erzeugt. Die Energieerzeugungseinrichtung 12 wird mit erneuerbarer Energie wie zum Beispiel Windenergie oder Sonnenenergie betrieben. Im dargestellten Ausführungsbeispiel ist die Energieerzeugungseinrichtung 12 als Windenergieanlage ausgebildet. Die Energieerzeugungseinrichtung 12 kann vorteilhaft dezentral in unserer Nachbarschaft zu der Pyrolyseanlage 4 aufgestellt werden. Daher kann die erfindungsgemäße Anlage in beliebigen Produktionsbetrieben eingesetzt werden, wobei die Energie zum Betreiben der Pyrolyseanlage stets auf CO₂-neutrale Weise im Produktionsbetrieb selbst erzeugt werden kann.

Die im Rahmen des exothermen Pyrolyseprozesses entstehende Abwärme 10 wird in der in Fig. 2 dargestellten Anlagenkonfiguration einerseits dazu genutzt, das Heizmedium 3 der Heizungsanlage 2 in der Wärmetauschereinrichtung 11 auf die für den Betrieb der Heizungsanlage 2 erforderliche Betriebstemperatur zu erwärmen. Andererseits wird ein Teil der Abwärme 10 über Rückführmittel 15 zur Trocknungseinheit 14 zurückgeführt, um mit diesem Teil der Abwärme 10 das Einsatzmaterial für die Pyrolyseeinheit 6 auf die gewünschte Restfeuchte zu trocknen. Durch die Kombination dieser beiden unterschiedlichen Nutzungsarten für die Abwärme 10 wird erreicht, dass die erfindungsgemäße Anlage sehr flexibel betrieben werden kann. Wird beispielsweise an heißen Sommertagen weniger Abwärme 10 benötigt um das Heizmedium 3 aufzuwärmen, dann kann mehr Abwärme 10 dazu genutzt werden, das Einsatzmaterial auf die gewünschte Restfeuchte zu trocknen und es kann dann zum Beispiel auch sehr feuchtes Restholz bzw. sehr feuchtes zusätzliches Biomaterial bearbeitet werden.

Das Heizmedium 3 der Heizungsanlage 2, welches in der Wärmetauschereinrichtung 11 durch die Abwärme 10 erwärmt worden ist, wird dann in Werksgebäuden 1 zugeleitet, um diese zu beheizen. Auf diese Weise wird keine externe Energie benötigt, um das Heizmedium 3 auf die erforderliche Betriebstemperatur zu erwärmen. Dies spart Betriebskosten und trägt somit ebenfalls dazu bei, die Produktionskosten in dem Produktionsbetrieb zu senken.

### Bezugszeichenliste

- 1: Werksgebäude/Gebäude
- 2: Heizungsanlage
- 3: Heizmedium
- 4: Pyrolyseanlage
- 5: Pflanzenkohle
- 6: Pyrolyseeinheit
- 7: Einrichtung
- 8: Restholz
- 9: Abführeinrichtung
- 10: Abwärme
- 11: Wärmetauschereinrichtung
- 12: Energieerzeugungseinrichtung
- 13: Sammelbehälter
- 14: Trocknungseinheit
- 15: Rückführmittel
- 16: Biomaterial

## Patentansprüche

1. Verfahren zur Verringerung der Produktionskosten bei der Herstellung von Produkten in einem Produktionsbetrieb, wobei in dem Produktionsbetrieb Restholz (8) aus Verpackungsmaterial von in den Produktionsbetrieb gelieferten Halbzeugen, Vorprodukten, Produktionsmitteln oder sonstigen Materialien anfällt,
**gekennzeichnet durch folgende Verfahrensschritte:**
V1) Verarbeitung des Restholzes (8) zu einem Einsatzmaterial für eine Pyrolyseanlage (4) zur Herstellung von Pflanzenkohle (5);
V2) Einbringen des Einsatzmaterials in die Pyrolyseanlage (4);
V3) Umwandlung des Einsatzmaterials **durch** Pyrolyse in Pflanzenkohle (5) unter Erzeugung von Abwärme (10);
V4) Verkauf der Pflanzenkohle (5) an Pflanzenkohleverwerter;
V5) Verwendung der Abwärme (10) zur Erwärmung eines Heizmediums (3) zur Beheizung von Gebäuden (1) des Produktionsbetriebes und/oder zum Trocknen des Einsatzmaterials.

2. Verfahren nach Anspruch 1,
wobei von außerhalb des Produktionsbetriebes zusätzliches Biomaterial (16) bezogen wird, welches zusammen mit dem Restholz (8) als Einsatzmaterial für die Pyrolyseanlage (4) eingesetzt wird.

3. Verfahren nach Anspruch 1 oder 2,
wobei die Pyrolyseanlage (4) mit aus erneuerbarer Energie erzeugtem Strom betrieben wird.

4. Anlage zur Verringerung der Produktionskosten bei der Herstellung von Produkten in einem Produktionsbetrieb, wobei das Produktionsbetrieb Werksgebäude (1) aufweist, welche mithilfe einer Heizungsanlage (2) durch ein Heizmedium (3) beheizbar sind,
**dadurch gekennzeichnet,**
**dass** die Anlage eine Pyrolyseanlage (4) zur Herstellung von Pflanzenkohle (5) umfasst, wobei die Pyrolyseanlage (4) eine Pyrolyseeinheit (6), eine Einrichtung (7) zur Vorbereitung und Zuführung von in dem Produktionsbetrieb anfallendem Restholz (8) zu der Pyrolyseeinheit (6) und eine Abführeinrichtung (9) zum Abführen von Pflanzenkohle (5) aus der Pyrolyseeinheit (6) umfasst, wobei eine mit einer Abwärme (10) des Pyrolyseprozesses betreibbare Wärmetauschereinrichtung (11) vorgesehen ist, mit der zumindest ein Teil des von der Heizungsanlage (2) verwendeten Heizmediums (3) erwärmbar ist.

5. Anlage nach Anspruch 4,
wobei eine Energieerzeugungseinrichtung (12) vorgesehen ist, die mit erneuerbarer Energie betreibbar ist und mit der der für den Betrieb der Pyrolyseanlage (4) benötigte Strom erzeugbar ist.

6. Anlage nach Anspruch 4 oder 5,
wobei die Einrichtung (7) zur Vorbereitung und Zuführung von in dem Produktionsbetrieb anfallendem Restholz (8) einen Sammelbehälter (13) umfasst, in welchem zumindest das für die Verarbeitung in der Pyrolyseeinheit (6) vorbereitete Restholz (8) aus dem Produktionsbetrieb sammelbar ist.

7. Anlage nach Anspruch 6,
wobei vor dem Sammelbehälter (13) oder zwischen dem Sammelbehälter (13) und der Pyrolyseeinheit (6) eine Trocknungseinheit (14) vorgesehen ist, mit der das der Pyrolyseeinheit (6) zuzuführende Restholz (8) auf eine gewünschte Restfeuchte getrocknet werden kann.

8. Anlage nach Anspruch 7,
wobei Rückführmittel (15) vorgesehen sind, mit denen zumindest ein Teil der Abwärme (10) aus dem Pyrolyseprozess der Trocknungseinheit (14) zuführbar ist, um diese zu betreiben.
